# EUROPEAN PATENT APPLICATION

(11) **EP 4 707 135 A1**
(43) Date of publication of application: **11.03.2026**
(21) Application number: 24830916.3
(22) Date of filing: 27.06.2024
(51) Int. Cl.: B62D 25/12, B60Q 1/26, B60Q 1/04

(54) **FRONT HOOD, FULL-WIDTH LAMP, AND VEHICLE**

(30) Priority: 28.06.2023 CN 202310779872; 28.06.2023 CN 202321675203 U
(71) Applicant: Shanghai Lixiang Automobile Co., Ltd., Shanghai 201800 (CN)
(72) Inventor: WANG, Shunke, Shanghai 201800 (CN); CHEN, Bo, Shanghai 201800 (CN); ZHANG, Shiying, Shanghai 201800 (CN)
(74) Representative: 2SPL Patentanwälte PartG mbB
(86) International application number: PCT/CN2024/102110
(87) International publication number: WO 2025/002284

(57) **Abstract**

A front hood, a full-width lamp, and a vehicle. A mounting recess (11) is formed on the front hood (1) by depression; the mounting recess (11) extends in the width direction of the vehicle; and at least a part of the full-width lamp (2) can be embedded into the mounting recess (11). The front hood and the vehicle can provide sufficient arrangement space for the full-width lamp, thereby making the full-width lamp be used in a good environment, and reducing damage to the full-width lamp when a scratch and a collision occur to the vehicle.

## Description

The present application claims priority to Chinese patent application No. 202310779872.1, entitled "FRONT HOOD, FULL-WIDTH LAMP, AND VEHICLE", filed before the China National Intellectual Property Administration (CNIPA) on June 28, 2023, and Chinese Patent Application No. 202321675203.1, entitled "OUTER LAMP COVER, FULL-WIDTH LAMP, AND VEHICLE", filed before the CNIPA on June 28, 2023, the entire contents of which are incorporated herein by reference.

### TECHINCAL FIELD

The present application relates to the field of vehicle technologies, and in particular, to a front hood, a full-width lamp, and a vehicle.

### BACKGROUND

With the refined development of vehicle lighting systems, an increasing number of vehicles are equipped with full-width lamps. Most existing full-width lamps are typically installed at the front of the vehicle, in the zone of the front bumper.

In practical use, however, it has been found that this zone contains numerous structural components of the vehicle body, resulting in limited space for the installation of full-width lamps. Additionally, since this zone is close to the vehicle's engine compartment, the temperature in this zone is relatively high, resulting in a harsh operating environment for the full-width lamps. Moreover, in the event of minor collisions, the full-width lamps are susceptible to damage from external forces.

### SUMMARY

The front hood, full-width lamp, and vehicle provided by the present application can offer sufficient installation space for the full-width lamp, enable the through-type light to be used in a favorable environment, and reduce the damage of the through-type light in the event of a vehicle scrape or collision.

The present application provides a front hood, a mounting recess extending along a width direction of a vehicle being recessed and formed on the front hood, the mounting recess is configured to receive at least a portion of a full-width lamp to be embedded.

The front hood includes an inner panel and an outer panel connected to each other, the inner panel is disposed on a side of the outer panel facing an engine compartment of the vehicle; the mounting recess is recessed and formed on the outer panel, and the inner panel covers a zone of the outer panel where the mounting recess is formed.

The front hood further includes a plurality of locating pins fixed to the mounting recess. The plurality of locating pins are spaced apart along the width direction of the vehicle, and configured to match with a plurality of locating holes on the full-width lamp.

In the front hood, the mounting recess is formed with a plurality of mounting holes spaced apart along the width direction of the vehicle, and the plurality of mounting holes are configured to receive connectors attached to the full-width lamp.

In the front hood, the plurality of mounting holes and the plurality of locating pins are spaced apart along a longitudinal direction of the vehicle.

In the front hood, the mounting recess is recessed and formed at an end of the front hood away from a front bumper along a longitudinal direction of the vehicle.

The application further provides a full-width lamp, adapted for use with the front hood described above. At least a portion of the full-width lamp is detachably embedded into the mounting recess, and a light-emitting portion is formed on a side of the full-width lamp facing away from the front hood.

The full-width lamp includes:
a lamp cover connected to the mounting recess, the light-emitting portion being provided on the lamp cover;
a lamp box connected to the mounting recess, the lamp box and the lamp cover are connected to enclose a cavity; and
a light-emitting assembly disposed inside the cavity, light emitted by the light-emitting assembly exits through the light-emitting portion along a first direction, the first direction being parallel to a longitudinal direction of the vehicle.

In the full-width lamp, the lamp cover is adhesively fixed to the mounting recess via a sealing strip.

In the full-width lamp, the lamp box is detachably connected to the mounting recess via a connector.

In the full-width lamp, the connector includes a screw, a nut, and a sealing gasket, the screw passes through the mounting recess and is screwed to the nut, the sealing gasket is disposed between the nut and the mounting recess, a flange protrudes from a periphery of the nut, the flange and the sealing gasket cooperate to form a clamping groove, a fixing portion extends from a bottom of the lamp box, and the fixing portion is embedded and fixed in the clamping groove.

In the full-width lamp, the connector is a snap-fit component, the snap-fit component includes a snap-fit portion and a sealing portion connected to each other, a sealing groove is formed on a periphery of the sealing portion, the snap-fit portion passes through the mounting recess, a fixing portion extends from a bottom of the lamp box, and the fixing portion is embedded and fixed in the sealing groove.

In the full-width lamp, the lamp cover includes a mounting plane, an angle is formed between the mounting plane and the first direction and an angle is formed between the mounting plane and a second direction, the first direction and the second direction are perpendicular to each other, and the second direction is parallel to a height direction of the vehicle; the light-emitting portion is provided on the mounting plane, and a dimension of the light-emitting portion along the second direction is greater than 0 mm.

In the full-width lamp, along a direction perpendicular to the mounting plane, a distance between a projection of the light-emitting portion and an edge of the mounting recess nearest to the light-emitting portion ranges from 0 mm to 25 mm.

In the full-width lamp, the light-emitting assembly includes a light source, and the light source and the light-emitting portion are spaced apart and opposite to each other along the first direction.

The full-width lamp further includes:
a light homogenizing assembly disposed inside the cavity, wherein the light homogenizing assembly is located between the light-emitting assembly and the light-emitting portion;
wherein light emitted by the light-emitting assembly is directed to pass through the light homogenizing assembly along the first direction, and exits through the light-emitting portion of the lamp cover.

In the full-width lamp, the light homogenizing assembly includes a support portion and a light-transmitting portion, the support portion and the light-transmitting portion are integrally formed or detachably connected, the support portion is connected to the lamp box, and the light-transmitting portion is disposed opposite to the light-emitting portion.

In the full-width lamp, along a direction perpendicular to a mounting plane of the lamp cover, a projection of the light-emitting portion falls within a projection of the light-transmitting portion, and a distance between an edge of the projection of the light-transmitting portion and an edge of the projection of the light-emitting portion ranges from 2 mm to 10 mm.

In the full-width lamp, the light-emitting assembly includes:
a light source; and
a reflective element with a reflective surface, wherein an angle is formed between the reflective surface and the first direction and an angle is formed between the reflective surface and a second direction, the light source and the reflective surface are spaced apart and opposite to each other along the second direction, and the reflective surface and the light-emitting portion are spaced apart and opposite to each other along the first direction;
wherein light emitted by the light source travels along the second direction to irradiate on the reflective surface, then the light is reflected by the reflective surface, passes through the light homogenizing assembly along the first direction, and exits through the light-emitting portion.

The full-width lamp further includes a baffle covering a side, away from the lamp cover, of a zone of the lamp box located outside the mounting recess.

In the full-width lamp, the lamp cover includes:
a light-shielding cover formed with an opening; and
a light-transmitting component comprising a light-transmitting zone and a connection zone, the connection zone being located at a periphery of the light-transmitting zone, the light-transmitting zone being disposed through the opening to form the light-emitting portion, and the connection zone being attached to an inner surface of the light-shielding cover on an inner side of the light-shielding cover.

In the full-width lamp, the lamp cover includes a mounting plane, the light-emitting portion is formed on the mounting plane, and an angle is formed between the mounting plane and the first direction; or
angles are formed between the mounting plane and the first direction as well as between the mounting plane and a second direction, a dimension of the light-emitting portion along the second direction is greater than 0 mm, and the light-emitting portion is configured to allow light to pass through along the first direction;
wherein an angle is formed between the first direction and the second direction.

In the full-width lamp, the light-transmitting component and the light-shielding cover are integrally formed, detachably connected, adhesively fixed, or welded together.

In the full-width lamp, a distance between an edge of the connection zone away from the light-transmitting zone and an edge of the connection zone connected to the light-transmitting zone is less than or equal to 30 mm;
along a direction perpendicular to the mounting plane, a sum of a thickness of the connection zone and a thickness of the light-shielding cover as well as a thickness of the light-transmitting zone range from 2.5 mm to 4.5 mm; and the sum of the thickness of the connection zone and the thickness of the light-shielding cover is less than or equal to the thickness of the light-transmitting zone.

The present application further provides a vehicle, including the front hood or the full-width lamp described above.

In the front hood, the full-width lamp and the vehicle provided by the present application, the front hood is provided with a mounting recess, and the full-width lamp is mounted on the mounting recess. Since there is relatively ample space at the front hood, a sufficient space is provided for the layout of the full-width lamp. Additionally, the front hood is conducive to heat dissipation, which can effectively reduce the ambient temperature around the full-width lamp, thereby ensuring the full-width lamp to be used in a good environment. Moreover, the full-width lamp is mounted on the front hood, maintaining a certain distance from the foremost point of the vehicle. In the event of a vehicle scrape or collision, this design can effectively reduce the risk of damage to the full-width lamp.

The above description is only a general overview of solutions of the present disclosure. In order to learn technical means of the present disclosure more clearly and allow the technical means to be implemented based on the disclosure of the description, and in order to make the above and other objects, features and advantages of the present disclosure more apparent and understandable, specific embodiments of the present disclosure are illustrated below.

### BRIEF DESCRIPTION OF THE DRAWINGS

In order to describe technical solutions of the embodiments of the present disclosure or the related art more clearly, the accompanying drawings used in the illustration of the embodiments or the related art will be briefly introduced. Apparently, the accompanying drawings in the following explanation illustrate merely some embodiments of the present disclosure, and those skilled in the art may obtain other accompanying drawings based on these accompanying drawings without paying any creative effort.
FIG. 1 is a schematic structural diagram of a full-width lamp provided by an embodiment of the present application;
FIG. 2 is a schematic structural diagram of a full-width lamp provided by an embodiment of the present application;
FIG. 3 is another schematic structural diagram of a full-width lamp provided by an embodiment of the present application;
FIG. 4 is yet another schematic structural diagram of a full-width lamp provided by an embodiment of the present application;
FIG. 5 is a partial schematic structural diagram of a light-emitting component of the full-width lamp provided by an embodiment of the present application;
FIG. 6 is another partial schematic structural diagram of a light-emitting component of the full-width lamp provided by an embodiment of the present application;
FIG. 7 is a schematic structural diagram of a lamp cover of the full-width lamp provided by an embodiment of the present application;
FIG. 8 is another schematic structural diagram of a lamp cover of the full-width lamp provided by an embodiment of the present application;
FIG. 9 is a schematic structural diagram of a light homogenizing assembly of the full-width lamp provided by an embodiment of the present application;
FIG. 10 is another schematic structural diagram of a light homogenizing assembly of the full-width lamp provided by an embodiment of the present application;
FIG. 11 is yet another schematic structural diagram of a light homogenizing assembly of the full-width lamp provided by an embodiment of the present application;
FIG. 12 is a schematic structural diagram of a light-transmitting component of the full-width lamp provided by an embodiment of the present application;
FIG. 13 is a schematic diagram illustrating a connection structure of a full-width lamp and a front hood according to an embodiment of the present application; and
FIG. 14 is another schematic diagram illustrating a connection structure of a full-width lamp and a front hood according to an embodiment of the present application.

### List of reference numerals:

1. Front hood; 11. Mounting recess; 12. Outer panel; 13. Inner panel; 2. Full-width lamp; 21. Lamp cover; 211. Light-emitting portion; 212. Transparent cover; 213. Light-shielding layer; 214. Light-shielding cover; 215. Light-transmitting component; 2151. Light-transmitting zone; 2152. Connection zone; 216. Mounting plane; 22. Lamp box; 221. Connector; 2211. Screw; 2212. Nut; 2213. Sealing gasket; 2214. Snap-fit portion; 2215. Sealing portion; 222. Fixing portion; 23. Cavity; 241. Light source; 2411. Circuit board; 2412. LED lamp; 242. Reflective element; 2421. Reflective surface; 2422. Snap-fit mechanism; 25. Light homogenizing assembly; 251. Support portion; 252. Light-transmitting portion; 26. Plug-in protrusion; 27. Plug-in recess; 28. Sealing adhesive ; 29. Baffle; X. First direction; Y. Second direction; Z. Third direction.

### DETAILED DESCRIPTION

To make objectives, technical solutions, and advantages of embodiments of the present disclosure clearer, a clear and thorough description for solutions in the embodiments of the present disclosure will be given below in conjunction with the accompanying drawings in the embodiments of the present disclosure. Apparently, the described embodiments are a part of embodiments of the present disclosure, not all the embodiments. All other embodiments obtained, based on the embodiments in the present disclosure, by those skilled in the art without paying creative effort fall within the protection scope of the present disclosure.

In the description of the present application, it should be noted that unless otherwise specified, "a plurality of" means two or more; terms such as "upper", "lower", "left", "right", "inner", "outer", etc., indicate orientations or positional relationships only for the convenience of describing the present application and simplifying the description, and do not indicate or imply that the referred device or element must have a specific orientation, be constructed, or operate in a specific orientation. Therefore, they should not be construed as limitations on the present application. In addition, terms such as "first", "second", etc., are used only for descriptive purposes and should not be understood as indicating or implying relative importance.

The directional terms appearing in the following description are all based on the directions shown in the drawings and are not intended to limit the specific structure of the embodiments of the present application. In the description of the present application, it should also be noted that unless otherwise explicitly specified and defined, the terms "installation", "connection", etc., should be understood broadly. For example, it may be a fixed connection, a detachable connection, or an integral connection; it may be a direct connection or an indirect connection. Those skilled in the art can understand the specific meanings of the above terms in the present application based on specific circumstances.

To better understand the technical solutions and technical effects of the present application, specific embodiments are described in detail in conjunction with the accompanying drawings.

It should be noted that the directional terms "first direction X", "second direction Y", and "third direction Z" appearing in the following description are only used to more clearly illustrate the specific structure of the present application in conjunction with the drawings, and the present application is not limited thereto. There are angles between any two of the first direction X, the second direction Y, and the third direction Z. Optionally, the first direction X, the second direction Y, and the third direction Z are perpendicular to each other.

Specifically, when a front hood 1 of a vehicle is in a closed state, the first direction X is a longitudinal direction of the vehicle, the second direction Y is a height direction of the vehicle, and the third direction Z is a width direction of the vehicle. The first direction X and the third direction Z are both parallel to the horizontal direction, and the second direction Y is parallel to the vertical direction.

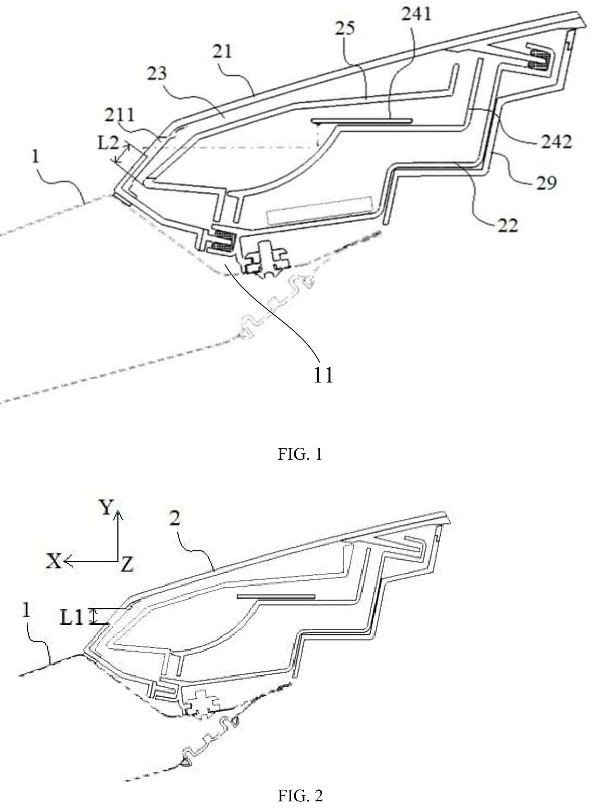

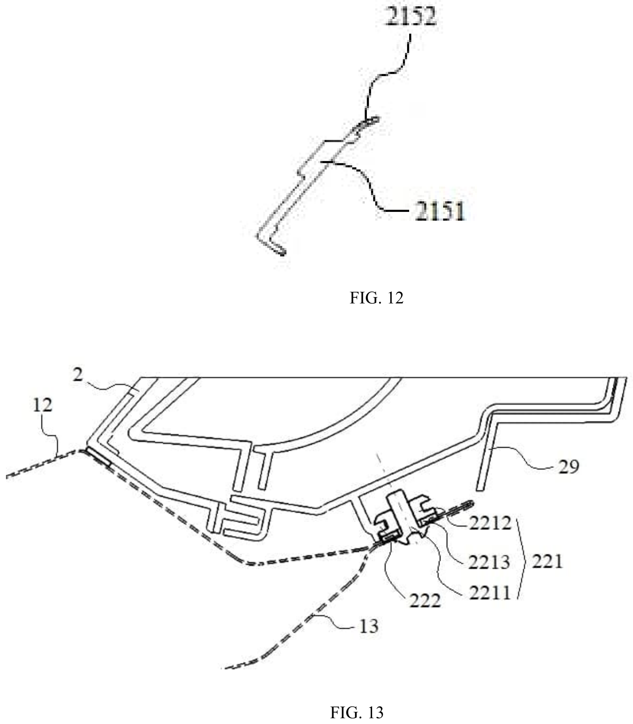

As shown in FIG. 1 and FIG. 13, the present application provides a front hood with a mounting recess 11 recessed and formed thereon. The mounting recess 11 has a certain dimension along the longitudinal direction of the vehicle, and extends along the width direction of the vehicle. At least a portion of a full-width lamp 2 can be embedded in the mounting recess 11.

As shown in FIG. 1, the front hood 1 includes an outer panel 12 and an inner panel 13. The side of the front hood 1 facing the engine compartment is the inner side, and the side of the front hood 1 facing away from the engine compartment is the outer side. The mounting recess 11 is recessed and formed on the outer panel 12. The inner panel 13 is connected to the inner side of the outer panel 12 and covers a protrusion formed on the inner surface of the outer panel 12 when the mounting recess 11 is formed. The inner panel 13 can support and fix the outer panel 12 while protecting the mounting recess 11 from deformation due to force, thereby avoiding stress damage to the full-width lamp 2.

The front hood 1 also includes a plurality of locating pins. The plurality of locating pins are fixed to the mounting recess 11 and spaced apart along the width direction of the vehicle. The plurality of locating pins are configured for matching with a plurality of locating holes on the full-width lamp 2, enabling positioning between the full-width lamp 2 and the front hood 1.

The mounting recess 11 is provided with a plurality of mounting holes spaced apart along the width direction of the vehicle. These mounting holes are designed to receive connectors 221 connected to the full-width lamp 2. The mounting holes and the locating pins are arranged at intervals along the longitudinal direction the vehicle. The full-width lamp 2 is connected to the front hood 1 through these connectors 221.

Optionally, the mounting recess 11 is recessed and formed at an end of the front hood 1 away from the front bumper along the longitudinal direction of the vehicle. This configuration allows the full-width lamp 2 to be mounted on the upper part of the front hood 1, maintaining a certain distance from the foremost point of the vehicle. In the event of a vehicle scrape or collision, this design can effectively reduce the risk of damage to the full-width lamp 2.

The front hood 1 of this embodiment of the application is provided with a mounting recess 11, and a full-width lamp 2 is mounted on the mounting recess 11. Since there is relatively ample space at the front hood 1, a sufficient space is provided for the layout of the full-width lamp 2. Additionally, the front hood is conducive to heat dissipation, which can effectively reduce the ambient temperature around the full-width lamp 2, thereby ensuring the full-width lamp 2 to be used in a good environment.

As shown in FIG. 2, the present application provides a full-width lamp 2. The full-width lamp 2 is mounted on the front hood 1 of the vehicle. The mounting recess 11 is recessed and formed on the front hood 1. At least a portion of the full-width lamp 2 is detachably embedded into the mounting recess 11. A light-emitting portion 211 is formed on a side of the full-width lamp 2 facing away from the front hood 1 to allow light to emit therefrom.

Optionally, the full-width lamp 2 is arranged on the front hood 1 at the front of the vehicle. Depending on styling, space, and performance requirements, the full-width lamp 2 can be arranged at the front part, the middle part, the rear part, or other positions of the front hood 1. During the opening and closing of the front hood 1, the full-width lamp 2 moves together with the front hood 1.

Optionally, when the full-width lamp 2 is arranged on the front hood 1 at the front of the vehicle, the distance between the full-width lamp 2 and the ground is 500 mm to 1500 mm. This ensures that when the full-width lamp 2 meets this installation height, it can be installed on the front hood 1 rather than at the front of the vehicle.

The full-width lamp 2 of this embodiment of the application is mounted on the mounting recess 11 that is provided on the front hood 1. Since there is relatively ample space at the front hood 1, a sufficient space is provided for the layout of the full-width lamp 2. Additionally, the front hood is conducive to heat dissipation, which can effectively reduce the ambient temperature around the full-width lamp 2, thereby ensuring the full-width lamp 2 to be used in a good environment. Moreover, the full-width lamp 2 is mounted on the front hood 1, maintaining a certain distance from the foremost point of the vehicle. In the event of a vehicle scrape or collision, this design can effectively reduce the risk of damage to the full-width lamp 2.

As shown in FIG. 1 to FIG. 4, the full-width lamp 2 provided by embodiments of the application includes a lamp cover 21, a lamp box 22, and a light-emitting assembly.

The lamp cover 21 is in the mounting recess 11 and connected to the front hood 1, and the light-emitting portion 211 is provided on the lamp cover 21.

The lamp box 22 is in the mounting recess 11 and connected to the front hood 1, and the lamp box 22 and the lamp cover 21 are coupled to enclose a cavity 23.

The light-emitting assembly is arranged in the cavity 23. The light emitted by the light-emitting assembly can exit through the light-emitting portion 211 along the first direction X. This configuration ensures that when the full-width lamp 2 is mounted on the front hood 1 of the vehicle and the front hood 1 is in the closed state, the light emitted by the light-emitting assembly can irradiate horizontally toward the front of the vehicle.

Optionally, the dimension of the light-emitting portion 211 along the second direction Y is greater than 0, ensuring that the light-emitting portion 211 has a certain dimension along the second direction Y to allow light to exit through the light exit port along the first direction X.

Specifically, the dimension L1 of the light-emitting portion 211 in the second direction Y ranges from 6 mm to 30 mm, ensuring that the light-emitting portion 211 has sufficient size for light to pass through along the first direction X.

Optionally, the dimension of the light-emitting portion 211 in the second direction Y can be set according to styling requirements of the vehicle. Along the third direction Z, the dimensions of the light-emitting portion 211 at various locations in the second direction Y may be consistent or may vary.

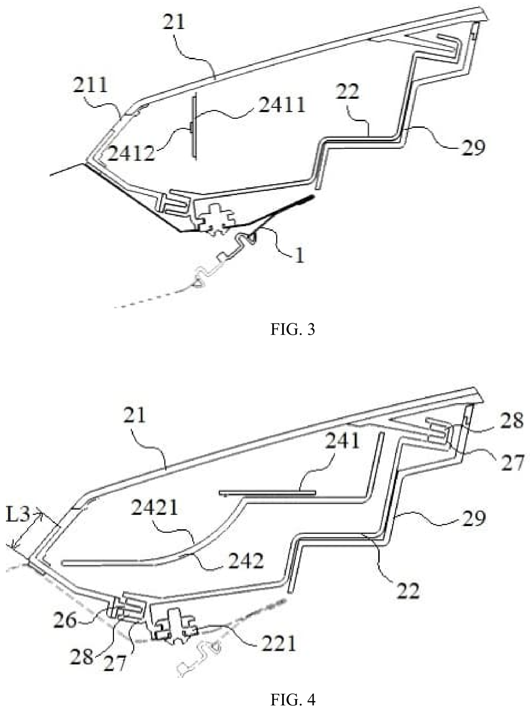

FIG. 3 shows a full-width lamp 2 provided by an embodiment of the application, in which the light-emitting assembly includes a light source 241. The light source 241 and the light-emitting portion 211 are spaced apart and opposite to each other along the first direction X. That is, light propagates directly between the light source 241 and the light-emitting portion 211. The light source 241 includes a circuit board 2411 and an LED lamp 2412 mounted on the circuit board 2411. The circuit board 2411 is detachably connected to the lamp cover 21 and/or the lamp box 22. The LED lamp 2412 is oriented toward the light-emitting portion 211.

FIG. 4 shows a full-width lamp 2 provided by an embodiment of the application, in which the light-emitting assembly includes a light source 241 and a reflective element 242. The reflective element 242 has a reflective surface 2421. An angle is formed between the reflective surface 2421 and the first direction X, and an angle is also formed between the reflective surface 2421 and the second direction Y. The light source 241 and the reflective surface 2421 are spaced apart and opposite to each other along the second direction Y, and the reflective surface 2421 and the light-emitting portion 211 are spaced apart and opposite to each other along the first direction X. The light emitted by the light source 241 travels along the second direction Y to irradiate on the reflective surface 2421, where it is reflected and then exits through the light-emitting portion 211 along the first direction X. That is, light propagates between the light source 241 and the light-emitting portion 211 via reflection. The light source 241 includes a circuit board 2411 and an LED lamp 2412 mounted on the circuit board 2411. The circuit board 2411 is detachably connected to the lamp cover 21 and/or the lamp box 22. The LED lamp 2412 is oriented toward the reflective surface 2421.

The reflective element 242 is made of opaque plastic material such as black plastic material, gray plastic material, or white plastic material. The reflective surface 2421 is formed by methods such as aluminum plating, masked aluminum plating, or chrome plating to ensure its light reflection effect.

The reflective surface 2421 can be a curved surface or a flat surface, as long as the reflection effect can be ensured.

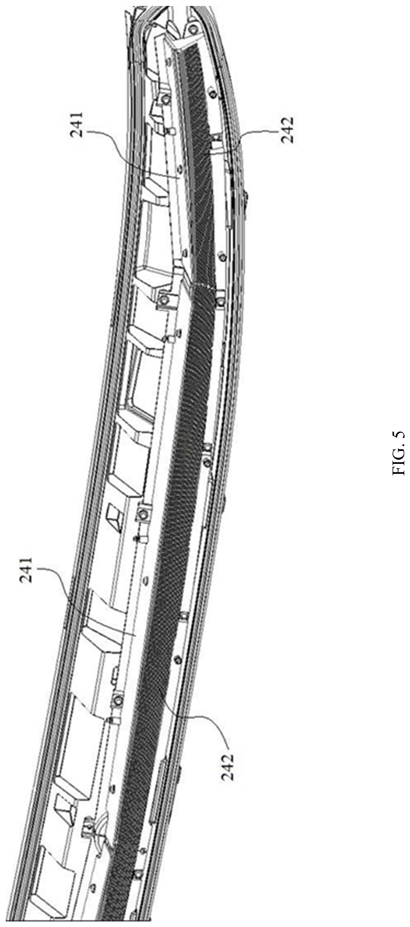

FIG. 5 shows a full-width lamp 2 provided by an embodiment of the application, in which a plurality of light sources 241 and a plurality of reflective elements 242 are provided. The plurality of light sources 241 are spaced apart along the third direction Z. By providing a plurality of light sources 241, the brightness of the full-width lamp 2 can be effectively ensured to be uniform along the third direction Z.

The plurality of reflective elements 242 are arranged along the third direction Z. Every two adjacent reflective elements 242 are detachably connected. By segmenting the reflective elements 242 in this manner, the advantages of easy disassembly and assembly, as well as convenient transportation and storage, are achieved.

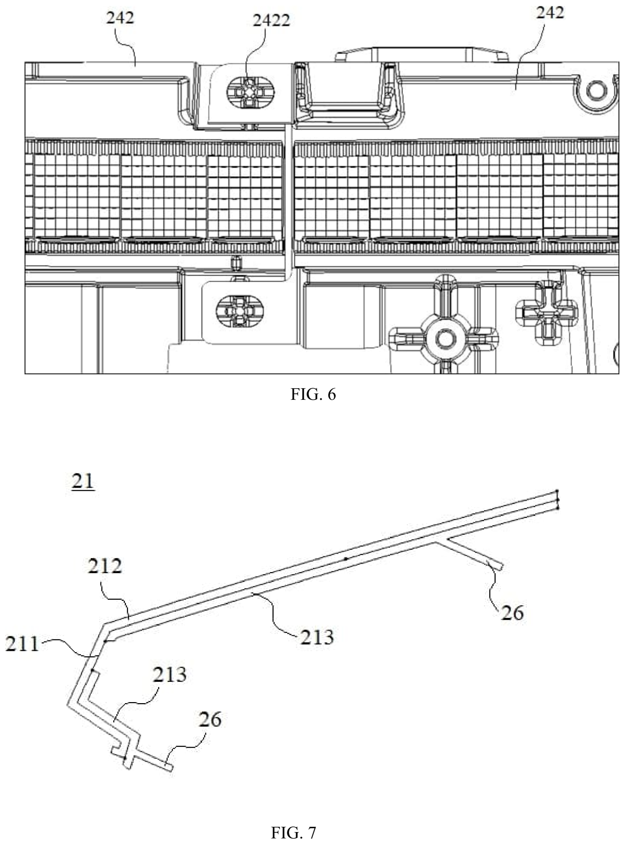

As shown in FIG. 6, every two adjacent reflective elements 242 are detachably connected by a snap-fit mechanism 2422. This ensures the accuracy of the gap between every two adjacent reflective elements 242, and guarantees the continuity of lighting signature.

FIG. 7 shows a full-width lamp 2 provided by an embodiment of the application, in which the lamp cover 21 includes a transparent cover 212 and a light-shielding layer 213. The light-shielding layer 213 partially covers the surface of the transparent cover 212 facing the lamp box 22, and the portion of the transparent cover 212 not covered by the light-shielding layer 213 forms the light-emitting portion 211.

The light-shielding layer 213 is coated on the surface of the transparent cover 212 facing the lamp box 22. Since the light-shielding layer 213 is very thin, the wall thickness of the lamp cover 21 can be effectively reduced.

Optionally, the wall thickness of the portion of the transparent cover 212 forming the light-emitting portion 211 ranges from 3 mm to 5 mm. The wall thickness of the portion where the transparent cover 212 and the light-shielding layer 213 are stacked is 1.5 mm to 3 mm.

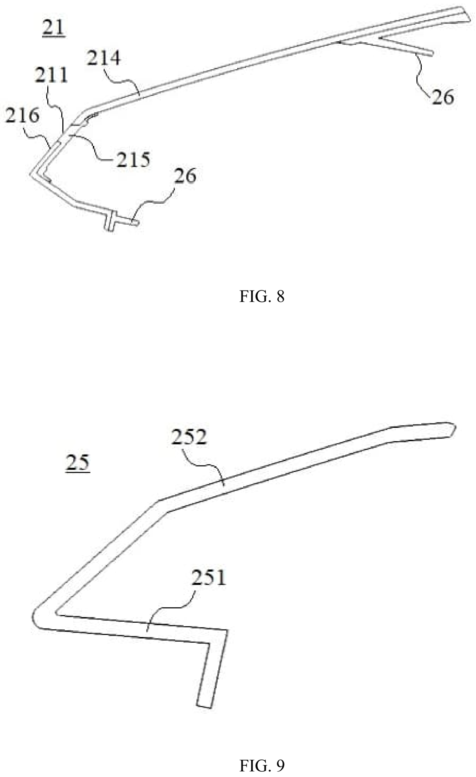

FIG. 8 shows a full-width lamp 2 provided by an embodiment of the application, in which the lamp cover 21 includes a light-shielding cover 214 and a light-transmitting component 215. The light-shielding cover 214 is used to block light, and the light-transmitting component 215 allows light to pass through to achieve illumination.

Specifically, an opening is formed on the light-shielding cover 214. It should be noted that when the light-transmitting component 215 and the light-shielding cover 214 are processed separately, the opening can be formed on the light-shielding cover 214. When the light-transmitting component 215 and the light-shielding cover 214 are integrally formed, the opening is defined by the boundary line between the light-transmitting component 215 and the light-shielding cover 214. The light-transmitting component 215 is detachably mounted in the opening and forms the light-emitting portion 211.

The light-transmitting component 215 is formed by injection molding using a pin gate feeding method. This method can effectively avoid the formation of a large-area double-layer coverage between the light-transmitting component 215 and the light-shielding cover 214, and offer the advantage of reducing the wall thickness of the lamp cover 21.

As shown in FIG. 12, the light-transmitting component 215 includes a light-transmitting zone 2151 and a connection zone 2152 located at the periphery of the light-transmitting zone 2151. The light-transmitting zone 2151 penetrates through the opening to form the light-emitting portion 211. The light-transmitting zone 2151 is embedded in the opening, so that the light-transmitting zone 2151 and the light-shielding cover are spliced together to form a sealed lamp cover 21. The connection zone 2152 is attached to the inner surface of the light-shielding cover 214 on the inner side of the light-shielding cover 214, that is, the connection zone 2152 and the light-shielding cover 214 are lap-jointed in a layered configuration. The light-transmitting zone 2151 is connected to the light-shielding cover 214 in a manner of splicing, which can effectively achieve weight reduction, thickness reduction, cost reduction, and meet the requirements for pedestrian protection.

In the full-width lamp 2 provided by this embodiment of the application, the light-shielding cover can block light, and the light-transmitting zone 2151 of the light-transmitting component forms the light-emitting portion at the opening of the light-shielding cover for light to pass through. During light propagation, the light only needs to pass through the light-transmitting zone 2151, resulting in a short light propagation path, thereby effectively reducing light loss during propagation and improving the lighting effect of the full-width lamp 2.

Optionally, the distance between an edge of the connection zone 2152 away from the light-transmitting zone 2151 and an edge of the connection zone 2152 connected to the light-transmitting zone 2151 is less than or equal to 30 mm, so that sufficient connection area is ensured between the connection zone 2152 and the light-shielding cover 214, and the area of the connection zone 2152 is minimized as much as possible. This facilitates the lightweight development of the lamp cover 21, and benefits pedestrian protection.

Specifically, the light-transmitting component 215 is formed by injection molding using a pin gate feeding method, which effectively avoids the formation of large-area double-layer coverage between the light-transmitting component 215 and the light-shielding cover 214. The coverage area can be controlled within 30 mm, also offering the advantage of reducing the wall thickness of the lamp cover 21.

Optionally, the light-transmitting component 215 and the light-shielding cover 214 can be dual-color integrally injection molded using different materials, detachably connected, adhesively fixed, or welded together. The present application does not limit the processing and connection methods of them.

Optionally, after the lamp cover 21 is formed by the light-shielding cover 214 and the light-transmitting component 215, a hardened paint layer is sprayed on the surface of the lamp cover 21 to enhance the connection strength between the light-shielding cover 214 and the light-transmitting component 215 and improve the scratch resistance of the outer surface of the lamp cover 21.

Optionally, the wall thickness of the light-transmitting component 215 ranges from 3 mm to 5 mm, and the wall thickness of the light-shielding cover ranges from 1.5 mm to 3.5 mm.

Optionally, the light-transmitting component 215 may be made of light-transmitting materials such as colorless transparent plastic, transparent plastics of other colors (e.g., smoke gray), or light-diffusing plastic. Specifically, the light transmittance of the transparent portion of the lamp cover 21 ranges from 40% to 88%, or from 40% to 80%.

Optionally, a hardened coating is sprayed on the outer surface of the lamp cover 21 for protection to improve the scratch resistance of the outer surface of the lamp cover 21.

Optionally, an anti-fog coating is applied to the inner surface of the lamp cover 21 or a desiccant is placed in the cavity 23 to improve the fogging resistance of the full-width lamp 2.

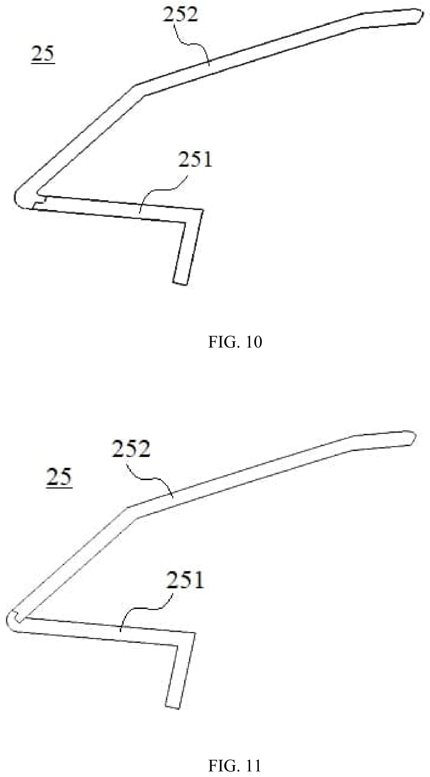

As shown in FIGS. 9 to 11, the full-width lamp 2 provided by the embodiment of the application further includes a light homogenizing assembly 25. The light homogenizing assembly 25 is disposed inside the cavity 23 and connected to the lamp cover 21 and/or the lamp box 22. The light homogenizing assembly 25 is located between the light-emitting assembly and the lamp cover 21. The light emitted by the light-emitting assembly passes through the light homogenizing assembly 25 and then exits through the light-emitting portion 211. By providing the light homogenizing assembly 25, the light emitted by the light-emitting assembly can be effectively homogenized, improving the uniformity of the light emitted by the full-width lamp 2. The lamp cover 21 and the lamp box 22 can protect the light-emitting assembly and the light homogenizing assembly 25. The lamp box 22 is integrally injection molded.

Optionally, the light homogenizing assembly 25 is located between the light-emitting assembly and the light-emitting portion 211. The light-emitting assembly is configured to provide the light source, and the light homogenizing assembly 25 is configured to homogenize the light emitted by the light-emitting assembly. Optionally, when the light-transmitting component 215 is made of a light-diffusing material, the light homogenizing assembly 25 can be omitted.

The light emitted by the light-emitting assembly can pass through the light homogenizing assembly 25 along the first direction X and exit through the light-emitting portion 211. When the full-width lamp 2 is mounted on the vehicle, the light emitted by the light-emitting assembly can irradiate horizontally toward the front of the vehicle.

According to the full-width lamp provided by the present application, the light homogenizing assembly 25 is disposed between the light-emitting portion 211 of the lamp shell and the light-emitting assembly, so that the light emitted by the light-emitting assembly is homogenized by the light homogenizing assembly 25, and then exits through the light-emitting portion 211, thereby effectively improving the illumination uniformity of the full-width lamp and enhancing the lighting effect.

Optionally, the dimension of the full-width lamp 2 in the third direction Z ranges from 800 mm to 2100 mm. For example, the dimension of the full-width lamp 2 in the third direction Z can be set to 1200 mm. Within the above range, the illumination of the full-width lamp 2 is continuous and consistent without any breaks. Both the lamp cover 21 and the light homogenizing assembly 25 are integrally injection molded to ensure the continuity of the physical space.

As shown in FIGS. 9 to 11, in the full-width lamp 2 provided by the embodiment of the application, the light homogenizing assembly 25 includes a support portion 251 and a light-transmitting portion 252. The support portion 251 and the light-transmitting portion 252 are integrally formed or detachably connected. The support portion 251 is detachably connected to the lamp box 22. The light-transmitting portion 252 is configured to homogenize the light emitted by the light-emitting assembly.

The material of the support portion 251 may be the same as or different from that selected for the light-transmitting portion 252. Specifically, the support portion 251 may be made of white plastic, and the light-transmitting portion 252 may be made of light-diffusing plastic.

The light-diffusing plastic is a light-transmitting but opaque light-diffusing material polymerized through a special process using transparent polycarbonate plastic as the base material, adding a certain proportion of light diffusing agent and other additives.

Alternatively, the light-diffusing material can also be made by adding materials that scatter light, such as BaSO4, to a colorless transparent polycarbonate base material. The light-diffusing material can also be made by adding macromolecular group materials that scatter light to a colorless transparent polycarbonate base material.

As shown in FIGS. 1 and 8, in the full-width lamp 2 provided by the embodiment of the application, the lamp cover 21 has a mounting plane 216. An angle is formed between the mounting plane 216 and the first direction X, or angles are formed between the mounting plane 216 and the first direction X as well as between the mounting plane 216 and the second direction Y. In this way, when the full-width lamp equipped with the lamp cover 21 provided by the embodiment is mounted on a vehicle, the mounting plane 216 and the light-emitting portion 211 face the front or front upper part of the vehicle, ensuring that light is emitted toward the front of the vehicle. The light-emitting portion 211 is provided on the mounting plane 216. Along the direction perpendicular to the mounting plane 216, the distance L2 between the projection of the connection joint between the support portion 251 and the light-transmitting portion 252 and the projection of the light-emitting portion 211 ranges from 0 mm to 10 mm.

Optionally, the dimension of the light-emitting portion 211 along the second direction Y is greater than 0, ensuring that the light-emitting portion 211 has a certain dimension along the second direction Y to allow light to exit through the light-emitting portion 211 along the first direction X. The dimension of the light-emitting portion 211 along the second direction Y is greater than 0 mm, allowing light to pass through the light-emitting portion 211 along the first direction X.

Specifically, the dimension L1 of the light-emitting portion 211 along the second direction Y ranges from 6 mm to 30 mm, ensuring that the light-emitting portion 211 has sufficient dimension for light to pass through along the first direction X.

Optionally, the dimension of the light-emitting portion 211 along the second direction Y can be set according to requirements for vehicle styling. Along the third direction Z, the dimensions of the light-emitting portion 211 at various locations along the second direction Y may be consistent or may vary.

Optionally, along the direction perpendicular to the mounting plane 216, the sum of the thickness of the connection zone 2152 and the thickness of the light-shielding cover, as well as the thickness of the light-transmitting zone 2151 range from 2.5 mm to 4.5 mm, facilitating the thin-type development of the lamp cover 21. The sum of the thickness of the connection zone 2152 and the thickness of the light-shielding cover 214 is less than or equal to the thickness of the light-transmitting zone 2151.

Optionally, along the direction perpendicular to the mounting plane 216, the distance between the projection of the connection joint between the support portion 251 and the light-transmitting portion 252 and the projection of the light-emitting portion 211 is greater than 5 mm. This configuration aims to shield the connection joint between the support portion 251 and the light-transmitting portion 252, preventing brightness variations in different parts of the full-width lamp 2 caused by inconsistent brightness between the connection joint between the support portion 251 and the light-transmitting portion 252 and other zones of the light-transmitting portion 252.

Optionally, as shown in FIG. 4, along the direction perpendicular to the mounting plane 216, the distance L3 between the projection of the light-emitting portion 211 and the edge of the mounting recess 11 ranges from 0 mm to 25 mm. This configuration ensures that the light-emitting portion 211 is not easily obstructed when the full-width lamp 2 is mounted, thereby guaranteeing its lighting effect.

Optionally, when the light-transmitting portion 252 and the support portion 251 are detachably connected, the connection joint of them can be located at the position of the light homogenizing assembly 25 facing the lamp cover 21 or at the position of the light homogenizing assembly 25 facing the mounting recess 11, which is not limited in the present application.

Optionally, the thickness of the light homogenizing assembly 25 at various locations ranges from 1.8 mm to 4.5 mm. For example, the thickness of the light homogenizing assembly 25 at various locations can be 3.5 mm. This ensures the light homogenizing performance while minimizing the thickness of the light homogenizing assembly 25 as much as possible, facilitating the miniaturization of the full-width lamp 2.

Optionally, to make the full-width lamp 2 more streamlined, the full-width lamp 2 needs to extend as much as possible along the third direction Z toward the edges in the vehicle's width direction, maximizing the dimension of the full-width lamp 2 along the third direction Z. The distance between the two sides of the light-emitting portion 211 of the full-width lamp 2 along the third direction Z and the corresponding two sides of the vehicle along the third direction Z is 10 mm to 200 mm or 20 mm to 200 mm.

As shown in FIG. 4, in the full-width lamp 2 provided by the embodiment of the application, one of the lamp box 22 and the lamp cover 21 is provided with a plug-in protrusion 26 on the periphery thereof, and the other is provided with a plug-in recess 27 on the periphery thereof. The plug-in protrusion 26 is embedded in the plug-in recess 27. Sealing adhesive 28 is provided in the plug-in recess 27, and the plug-in protrusion 26 and the plug-in recess 27 are adhesively fixed by the sealing adhesive 28 to ensure the sealing performance of the cavity 23.

FIG. 13 shows a full-width lamp 2 provided by an embodiment of the application, in which the lamp cover 21 and the mounting recess 11 are adhesively fixed by a sealing strip. The lamp box 22 and the mounting recess 11 are detachably connected by a sealing connector 221 to ensure the sealing of the gaps formed between the lamp cover 21 and the mounting recess 11 and between the lamp box 22 and the mounting recess 11, preventing the accumulation of rainwater, dust, or impurities.

Optionally, as shown in FIG. 13, the connector 221 may include a screw 2211, a nut 2212, and a sealing gasket 2213. The screw 2211 passes through the front hood 1 and the sealing gasket 2213 and is then screwed into the nut 2212. The sealing gasket 2213 is located between the nut 2212 and the mounting recess 11. The periphery of the nut 2212 protrudes to form a flange, and a clamping groove is formed between the flange and the sealing gasket. The bottom of the lamp box 22 extends to form a fixing portion 222, which is embedded into the clamping groove and fixed to the nut 2212.

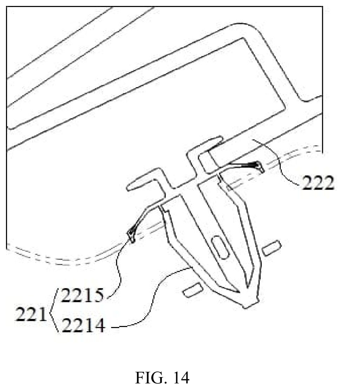

Optionally, as shown in FIG. 14, the connector 221 is a snap-fit component. The snap-fit component includes a snap-fit portion 2214 and a sealing portion 2215. A sealing groove is formed on the periphery of the sealing portion 2215. The snap-fit portion 2214 passes through the front hood 1, and the fixing portion 222 of the lamp box 22 is embedded into the sealing groove and fixed to the snap-fit component.

Optionally, as shown in FIGS. 1, 2, and 13, the full-width lamp 2 provided by embodiments of the application further includes a baffle 29. The baffle 29 covers the part of the lamp box 22 located outside the mounting recess 11 on the side away from the lamp cover 21. This protects the lamp box 22 and shields it, improving the aesthetics on the inner side of the front hood 1 after the full-width lamp 2 is mounted.

This embodiment of the application also provides a vehicle. The vehicle includes a front hood and the full-width lamp as described above. The full-width lamp is mounted on the front hood.

In the vehicle provided by the present application, a full-width lamp is mounted on a mounting recess that is provided on the front hood. Since there is relatively ample space at the front hood, a sufficient space is provided for the layout of the full-width lamp. Additionally, the front hood is conducive to heat dissipation, which can effectively reduce the ambient temperature around the full-width lamp, thereby ensuring the full-width lamp to be used in a good environment. Moreover, the full-width lamp is mounted on the front hood, maintaining a certain distance from the foremost point of the vehicle. In the event of a vehicle scrape or collision, this design can effectively reduce the risk of damage to the full-width lamp.

It should be noted that, in the absence of conflict, the embodiments in the present application and the features in the embodiments can be combined with each other.

In addition, the term "and/or" herein describes only an association relationship between associated objects, indicating that three relationships may exist. For example, A and/or B may indicate: A exists alone, both A and B exist, or B exists alone. In addition, the character "/" in this document generally indicates that the associated objects are in an "or" relationship.

It should be understood that in the embodiments of the present application, "B corresponding to A" means that B is associated with A, and B can be determined based on A. However, it should also be understood that determining B based on A does not mean that B is determined based solely on A; B can also be determined based on A and/or other information.

The device embodiments described above are merely illustrative. The units described as separate components may or may not be physically separate, and the components displayed as units may or may not be physical units, i.e., they may be located in one place or distributed across a plurality of network units. Some or all of the modules may be selected according to actual needs to achieve the objectives of the solutions of the embodiments. Those skilled in the art can understand and implement them without creative efforts.

Finally, it should be noted that the above embodiments are only used to illustrate the technical solutions of the present application and are not intended to limit them. Although the present application has been described in detail with reference to the foregoing embodiments, those skilled in the art should understand that they can still modify the technical solutions described in the foregoing embodiments or make equivalent replacements to some of the technical features. Such modifications or replacements do not cause the essence of the corresponding technical solutions to depart from the spirit and scope of the technical solutions of the embodiments of the present application.

## Claims

1. A front hood, a mounting recess extending along a width direction of a vehicle being recessed and formed on the front hood, wherein the mounting recess is configured to receive at least a portion of a full-width lamp to be embedded.

2. The front hood according to claim 1, comprising an inner panel and an outer panel connected to each other, the inner panel is disposed on a side of the outer panel facing an engine compartment of the vehicle; the mounting recess is recessed and formed on the outer panel, and the inner panel covers a zone of the outer panel where the mounting recess is formed.

3. The front hood according to claim 2, further comprising a plurality of locating pins fixed to the mounting recess, wherein the plurality of locating pins are spaced apart along the width direction of the vehicle, and configured to match with a plurality of locating holes on the full-width lamp.

4. The front hood according to claim 3, wherein the mounting recess is formed with a plurality of mounting holes spaced apart along the width direction of the vehicle, and the plurality of mounting holes are configured to receive connectors attached to the full-width lamp.

5. The front hood according to claim 4, wherein the plurality of mounting holes and the plurality of locating pins are spaced apart along a longitudinal direction of the vehicle.

6. The front hood according to any one of claims 1 to 5, wherein the mounting recess is recessed and formed at an end of the front hood away from a front bumper along a longitudinal direction of the vehicle.

7. A full-width lamp, adapted for use with the front hood according to any one of claims 1 to 6, wherein at least a portion of the full-width lamp is detachably embedded into the mounting recess, and a light-emitting portion is formed on a side of the full-width lamp facing away from the front hood.

8. The full-width lamp according to claim 7, comprising:
a lamp cover connected to the mounting recess, wherein the light-emitting portion is provided on the lamp cover;
a lamp box connected to the mounting recess, wherein the lamp box and the lamp cover are connected to enclose a cavity; and
a light-emitting assembly disposed inside the cavity, wherein light emitted by the light-emitting assembly exits through the light-emitting portion along a first direction, the first direction being parallel to a longitudinal direction of the vehicle.

9. The full-width lamp according to claim 8, wherein the lamp cover is adhesively fixed to the mounting recess via a sealing strip.

10. The full-width lamp according to claim 8, wherein the lamp box is detachably connected to the mounting recess via a connector.

11. The full-width lamp according to claim 8, wherein the connector comprises a screw, a nut, and a sealing gasket, the screw passes through the mounting recess and is screwed to the nut, the sealing gasket is disposed between the nut and the mounting recess, a flange protrudes from a periphery of the nut, the flange and the sealing gasket cooperate to form a clamping groove, a fixing portion extends from a bottom of the lamp box, and the fixing portion is embedded and fixed in the clamping groove.

12. The full-width lamp according to claim 8, wherein the connector is a snap-fit component, the snap-fit component comprises a snap-fit portion and a sealing portion connected to each other, a sealing groove is formed on a periphery of the sealing portion, the snap-fit portion passes through the mounting recess, a fixing portion extends from a bottom of the lamp box, and the fixing portion is embedded and fixed in the sealing groove.

13. The full-width lamp according to claim 8, wherein the lamp cover comprises a mounting plane, an angle is formed between the mounting plane and the first direction and an angle is formed between the mounting plane and a second direction, the first direction and the second direction are perpendicular to each other, and the second direction is parallel to a height direction of the vehicle; the light-emitting portion is provided on the mounting plane, and a dimension of the light-emitting portion along the second direction is greater than 0 mm.

14. The full-width lamp according to claim 13, wherein, along a direction perpendicular to the mounting plane, a distance between a projection of the light-emitting portion and an edge of the mounting recess nearest to the light-emitting portion ranges from 0 mm to 25 mm.

15. The full-width lamp according to claim 8, wherein the light-emitting assembly comprises a light source, and the light source and the light-emitting portion are spaced apart and opposite to each other along the first direction.

16. The full-width lamp according to claim 8, further comprising:
a light homogenizing assembly disposed inside the cavity, wherein the light homogenizing assembly is located between the light-emitting assembly and the light-emitting portion;
wherein light emitted by the light-emitting assembly is directed to pass through the light homogenizing assembly along the first direction, and exits through the light-emitting portion of the lamp cover.

17. The full-width lamp according to claim 16, wherein the light homogenizing assembly comprises a support portion and a light-transmitting portion, the support portion and the light-transmitting portion are integrally formed or detachably connected, the support portion is connected to the lamp box, and the light-transmitting portion is disposed opposite to the light-emitting portion.

18. The full-width lamp according to claim 17, wherein, along a direction perpendicular to a mounting plane of the lamp cover, a projection of the light-emitting portion falls within a projection of the light-transmitting portion, and a distance between an edge of the projection of the light-transmitting portion and an edge of the projection of the light-emitting portion ranges from 2 mm to 10 mm.

19. The full-width lamp according to claim 16, wherein the light-emitting assembly comprises:
a light source; and
a reflective element with a reflective surface, wherein an angle is formed between the reflective surface and the first direction and an angle is formed between the reflective surface and a second direction, the light source and the reflective surface are spaced apart and opposite to each other along the second direction, and the reflective surface and the light-emitting portion are spaced apart and opposite to each other along the first direction;
wherein light emitted by the light source travels along the second direction to irradiate on the reflective surface, then the light is reflected by the reflective surface, passes through the light homogenizing assembly along the first direction, and exits through the light-emitting portion.

20. The full-width lamp according to claim 8, further comprising:
a baffle covering a side, away from the lamp cover, of a zone of the lamp box located outside the mounting recess.

21. The full-width lamp according to claim 8, wherein the lamp cover comprises:
a light-shielding cover formed with an opening; and
a light-transmitting component comprising a light-transmitting zone and a connection zone, the connection zone being located at a periphery of the light-transmitting zone, the light-transmitting zone being disposed through the opening to form the light-emitting portion, and the connection zone being attached to an inner surface of the light-shielding cover on an inner side of the light-shielding cover.

22. The full-width lamp according to claim 21, wherein the lamp cover comprises a mounting plane, the light-emitting portion is formed on the mounting plane, and an angle is formed between the mounting plane and the first direction; or
angles are formed between the mounting plane and the first direction as well as between the mounting plane and a second direction, a dimension of the light-emitting portion along the second direction is greater than 0 mm, and the light-emitting portion is configured to allow light to pass through along the first direction;
wherein an angle is formed between the first direction and the second direction.

23. The full-width lamp according to claim 21, wherein the light-transmitting component and the light-shielding cover are integrally formed, detachably connected, adhesively fixed, or welded together.

24. The full-width lamp according to claim 22, wherein a distance between an edge of the connection zone away from the light-transmitting zone and an edge of the connection zone connected to the light-transmitting zone is less than or equal to 30 mm;
along a direction perpendicular to the mounting plane, a sum of a thickness of the connection zone and a thickness of the light-shielding cover as well as a thickness of the light-transmitting zone range from 2.5 mm to 4.5 mm; and the sum of the thickness of the connection zone and the thickness of the light-shielding cover is less than or equal to the thickness of the light-transmitting zone.

25. A vehicle, comprising the front hood according to any one of claims 1 to 6, or the full-width lamp according to any one of claims 7 to 24.
